# EUROPEAN PATENT APPLICATION

(11) **EP 4 694 162 A1**
(43) Date of publication of application: **11.02.2026**
(21) Application number: 24858072.2
(22) Date of filing: 09.07.2024
(51) Int. Cl.: H04N 23/62

(54) **RESPONSE METHOD FOR CONTINUOUS OPERATIONS, AND DEVICE**

(30) Priority: 29.08.2023 CN 202311114808; 31.08.2023 CN 202311131288
(71) Applicant: Huawei Technologies Co., Ltd., Shenzhen, Guangdong 518129 (CN)
(72) Inventor: ZHOU, Ziyao, Shenzhen, Guangdong 518129 (CN); YANG, Tong, Shenzhen, Guangdong 518129 (CN); ZHANG, Yubo, Shenzhen, Guangdong 518129 (CN); LIU, Yanfang, Shenzhen, Guangdong 518129 (CN)
(74) Representative: Gill Jennings & Every LLP
(86) International application number: PCT/CN2024/104361
(87) International publication number: WO 2025/044528

(57) **Abstract**

This application provides a response method for continuous operations and a device. In the method, an electronic device detects a first operation triggered by a user at a first moment, and executes a response action corresponding to the first operation; detects a second operation triggered by the user at a second moment, where the second moment is later than the first moment; and if execution duration of the response action corresponding to the first operation at the second moment is greater than or equal to preset duration, ends the response action corresponding to the first operation, and executes a response action corresponding to the second operation, where the preset duration is less than single execution duration, and the single execution duration is preset sustained duration of the response action corresponding to the first operation. This solution accelerates a response speed of the electronic device to continuous operations triggered by the user, ensuring smooth response of the electronic device to the continuous operations of the user, and improving user experience.

## Description

### CROSS-REFERENCE TO RELATED APPLICATIONS

This application claims priorities to Chinese Patent Application No. 202311114808.8, filed with the China National Intellectual Property Administration on August 29, 2023 and entitled "RESPONSE METHOD FOR CONTINUOUS OPERATIONS AND DEVICE", and to Chinese Patent Application No. 202311131288.1, filed with the China National Intellectual Property Administration on August 31, 2023 and entitled "RESPONSE METHOD FOR CONTINUOUS OPERATIONS AND DEVICE", both of which are incorporated herein by reference in their entireties.

### TECHNICAL FIELD

This application relates to the field of terminal technologies, and in particular, to a response method for continuous operations and a device.

### BACKGROUND

During interaction between a user and an electronic device, to ensure that instant and effective feedback can be performed for each input of the user, the electronic device may respond to the input of the user in a manner such as displaying an animation on an interface, playing a sound effect, or vibration. For example, when the user uses a camera application on the electronic device, the user taps a photographing button, and an interface of the electronic device displays a black flash animation that simulates a mechanical shutter effect. Specifically, an all-black layer is displayed on a preview image in a viewfinder frame of a display interface, and transparency of the all-black layer is decreased over time until the clear preview image is displayed. The electronic device may further play a shutter click sound effect. When displaying the animation and playing the sound effect, the electronic device may complete image processing corresponding to a moment at which the user taps.

When input operations of the user are fast and continuous, for example, the user frequently taps the photographing button on the camera application, if a time interval at which the user triggers the tap operation is less than single play duration of the animation or the sound effect, how the electronic device responds to the continuous operations of the user becomes an urgent problem to be resolved.

### SUMMARY

This application provides a response method for continuous operations and a device, to accelerate a response speed of an electronic device to continuous operations triggered by a user, and ensure smooth response of the electronic device to the continuous operations of the user.

According to a first aspect, this application provides a response method for continuous operations, and the method may be applied to an electronic device. The method includes: detecting, by an electronic device, a first operation triggered by a user at a first moment, and executing a response action corresponding to the first operation; detecting a second operation triggered by the user at a second moment, where the second moment is later than the first moment; and if execution duration of the response action corresponding to the first operation at the second moment is greater than or equal to preset duration, ending the response action corresponding to the first operation, and executing a response action corresponding to the second operation, where the preset duration is less than single execution duration, and the single execution duration is preset sustained duration of the response action corresponding to the first operation.

In the foregoing method, the preset duration may be understood as preset minimum duration for the electronic device to execute a response action. When the electronic device receives an operation triggered by the user, if execution duration of a response action corresponding to a previous operation triggered by the user is greater than or equal to the preset duration, the electronic device may interrupt the response action corresponding to the previous operation, and execute a response action corresponding to the current operation, to accelerate a response speed of the electronic device to continuous operations triggered by the user, ensure smooth response of the electronic device to the continuous operation of the user, and improve user experience.

In a possible design, the method is applied to a photographing process, and the operation corresponds to a photographing operation of the user, for example, a press operation on a virtual photographing button.

In a possible design, the response action may be playing an animation, playing a sound effect, or both.

In a possible design, the method further includes: if the execution duration of the response action corresponding to the first operation at the second moment is less than the preset duration, continuously executing the response action corresponding to the first operation until the execution duration of the response action corresponding to the first operation is greater than or equal to the preset duration; and after the execution duration of the response action corresponding to the first operation is greater than or equal to the preset duration, ending the response action corresponding to the first operation, and executing the response action corresponding to the second operation.

According to this design, when the execution duration of the response action corresponding to the first operation at the second moment is less than the preset duration, the electronic device needs to continuously execute the response action corresponding to the first operation until the execution duration of the response action corresponding to the first operation is greater than or equal to the preset duration, then ends the response action corresponding to the first operation, and executes the response action corresponding to the second operation, so that an effect of the response action performed by the electronic device can be ensured. For example, when the response action includes playing an animation and a sound effect, the electronic device may continuously play, within the preset duration, an animation and a sound effect corresponding to a previous operation, so that the user does not experience unusual experience brought by fast switching of playing the animation and the sound effect. This ensures user perception and improves user experience.

In a possible design, the method further includes: when the execution duration of the response action corresponding to the first operation is less than the preset duration, detecting a plurality of operations triggered by the user; and determining a target operation from the plurality of operations, and using the target operation as the second operation, where the target operation is any one of the plurality of operations, or the target operation is an operation that is triggered earliest in the plurality of operations, or the target operation is an operation that is triggered latest in the plurality of operations.

According to this design, if the electronic device executes the response action corresponding to the first operation, and the execution duration of the response action corresponding to the first operation is less than the preset duration, the electronic device detects the plurality of operations triggered by the user, and the electronic device may determine the target operation from the plurality of operations, use the target operation as the second operation, and respond to the second operation after ending the response action corresponding to the first operation. This resolves a problem that the electronic device cannot make a response when the user triggers the operation too quickly.

In a possible design, the response action corresponding to the first operation includes data processing. Before the response action corresponding to the first operation ends and the response action corresponding to the second operation is executed, the method further includes: determining that the data processing in the response action corresponding to the first operation is completed.

According to this design, when the response action corresponding to the first operation includes the data processing, after the execution duration of the response action corresponding to the first operation is greater than or equal to the preset duration, the electronic device may further determine whether the data processing in the response action corresponding to the first operation is completed. If the data processing is not completed, the electronic device may continue to execute the response action corresponding to the first operation until the data processing is completed, to ensure that the electronic device can completely perform the data processing in the response action corresponding to the first operation, so that the electronic device can correctly respond to an operation triggered by the user.

In a possible design, the first operation is a photographing operation triggered by the user on a camera application of the electronic device. The response action corresponding to the first operation includes at least one of the following: playing an animation; playing a sound effect; and obtaining image information captured by a camera at the first moment, and performing image processing based on the image information.

According to this design, the response method for continuous operations provided in this application may be applied to the camera application. According to the response method for continuous operations provided in this application, when a response effect is ensured, the electronic device can respond, in a timely manner, to photographing operations continuously triggered by the user, to ensure smooth response after the user continuously triggers photographing operations, and improve user experience.

According to a second aspect, this application provides a response method for continuous operations, and the method may be applied to an electronic device. The method includes: detecting, by an electronic device, a first operation triggered by a user at a first moment, and executing a response action corresponding to the first operation, where the response action corresponding to the first operation includes data processing; detecting a second operation triggered by the user at a second moment, where the second moment is later than the first moment; and if the data processing in the response action corresponding to the first operation is completed at the second moment, ending the response action corresponding to the first operation, and executing a response action corresponding to the second operation.

In the foregoing method, when the response action corresponding to the first operation includes the data processing, when detecting the second operation triggered by the user at the second moment, the electronic device may determine whether the data processing in the response action corresponding to the first operation is completed. If the data processing is completed, the electronic device may end the response action corresponding to the first operation, and execute the response action corresponding to the second operation, to respond to the second operation in a timely manner. This accelerates a response speed of the electronic device to continuous operations.

In a possible design, the method further includes: if the data processing in the response action corresponding to the first operation is not completed at the second moment, continuously executing the response action corresponding to the first operation until the data processing is completed; and after the data processing is completed, ending the response action corresponding to the first operation, and executing the response action corresponding to the second operation.

According to this design, if the electronic device detects the second operation triggered by the user at the second moment, and the data processing in the response action corresponding to the first operation is not completed, the electronic device may continue to execute the response action corresponding to the first operation until the data processing is completed, to ensure that the electronic device can completely perform the data processing in the response action corresponding to the first operation, so that the electronic device can correctly respond to the operation triggered by the user.

According to a third aspect, this application provides an electronic device. The electronic device includes a plurality of functional modules, and the plurality of functional modules interact with each other, to implement the method performed by the electronic device in any one of the foregoing aspects and the implementations of the foregoing aspects. The plurality of functional modules may be implemented based on software, hardware, or a combination of software and hardware, and the plurality of functional modules may be randomly combined or divided based on specific implementation.

According to a fourth aspect, this application provides an electronic device, including at least one processor and at least one memory. The at least one memory stores computer program instructions, and when the electronic device runs, the at least one processor performs the method performed by the electronic device in any one of the foregoing aspects and the implementations of the foregoing aspects.

According to a fifth aspect, this application further provides a computer program product including instructions. When the computer program product runs on a computer, the computer is enabled to perform the method performed by the electronic device in any one of the foregoing aspects and the implementations of the foregoing aspects.

According to a sixth aspect, this application further provides a computer-readable storage medium. The computer-readable storage medium stores a computer program, and when the computer program is executed by a computer, the computer is enabled to perform the method performed by the electronic device in any one of the foregoing aspects and the implementations of the foregoing aspects.

According to a seventh aspect, this application further provides a chip. The chip is configured to read a computer program stored in a memory, to perform the method performed by the electronic device in any one of the foregoing aspects and the implementations of the foregoing aspect.

According to an eighth aspect, this application further provides a chip system. The chip system includes a processor, configured to support a computer apparatus in implementing the method performed by the electronic device in any one of the foregoing aspects and the implementations of the foregoing aspects. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1A to FIG. 1D are diagrams of a photographing interface of an electronic device;
FIG. 2 is a diagram of a structure of an electronic device according to an embodiment of this application;
FIG. 3 is a block diagram of a software structure of an electronic device according to an embodiment of this application;
FIG. 4 is a flowchart of a response method for continuous operations according to an embodiment of this application;
FIG. 5A and FIG. 5B are diagrams of a photographing process of a camera application according to an embodiment of this application;
FIG. 6 is a diagram of a transparency change curve of a superimposed layer according to an embodiment of this application;
FIG. 7 is a diagram of executing a response action according to an embodiment of this application;
FIG. 8 is a diagram of executing a response action according to an embodiment of this application;
FIG. 9 is a flowchart of a response method for continuous operations according to an embodiment of this application; and
FIG. 10 is a flowchart of a response method for continuous operations according to an embodiment of this application.

### DESCRIPTION OF EMBODIMENTS

To make objectives, technical solution, and advantages of embodiments of this application clearer, the following further describes embodiments of this application in detail with reference to the accompanying drawings. The terms "first" and "second" below in the description of embodiments of this application are merely intended for description, and shall not be understood as an indication or implication of relative importance or implicit indication of a quantity of indicated technical features. Therefore, a feature limited by "first" or "second" may explicitly or implicitly include one or more features.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following pieces (items)" or a similar expression thereof indicates any combination of these items, including a single item (piece) or any combination of a plurality of items (pieces). For example, at least one of a, b, or c may represent: a, b, c, a and b, a and c, b and c, or a, b and c, where a, b, and c may be a singular or plural number.

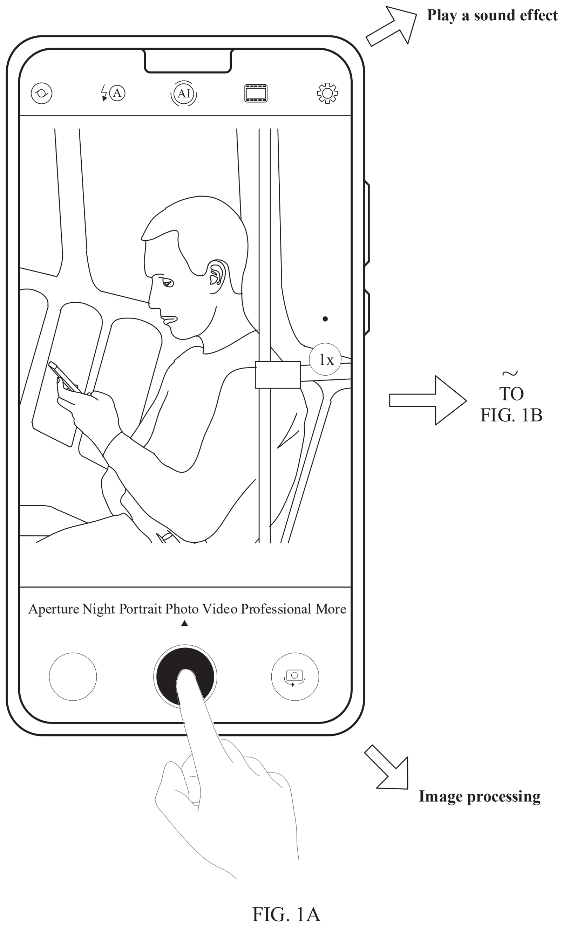

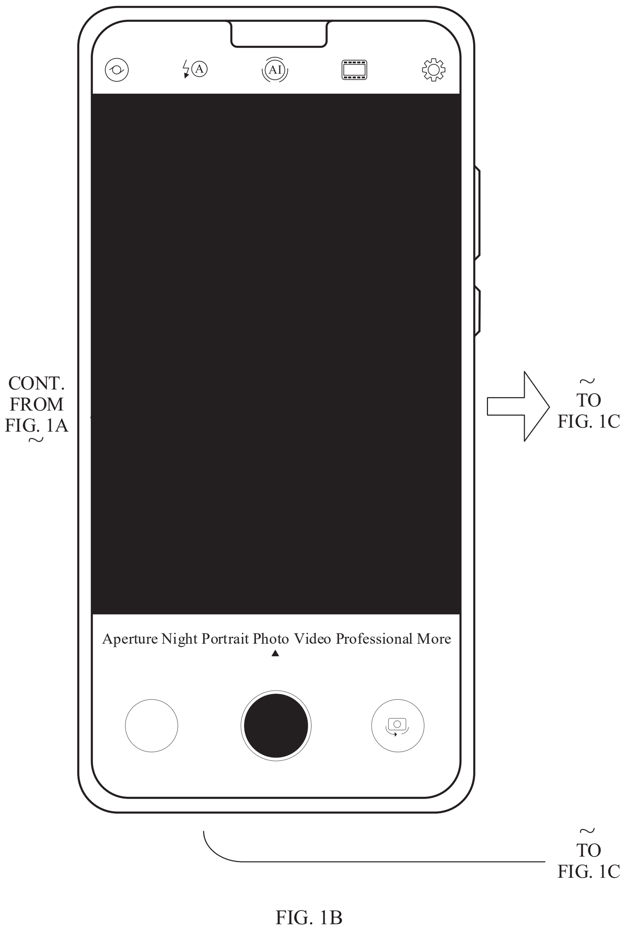

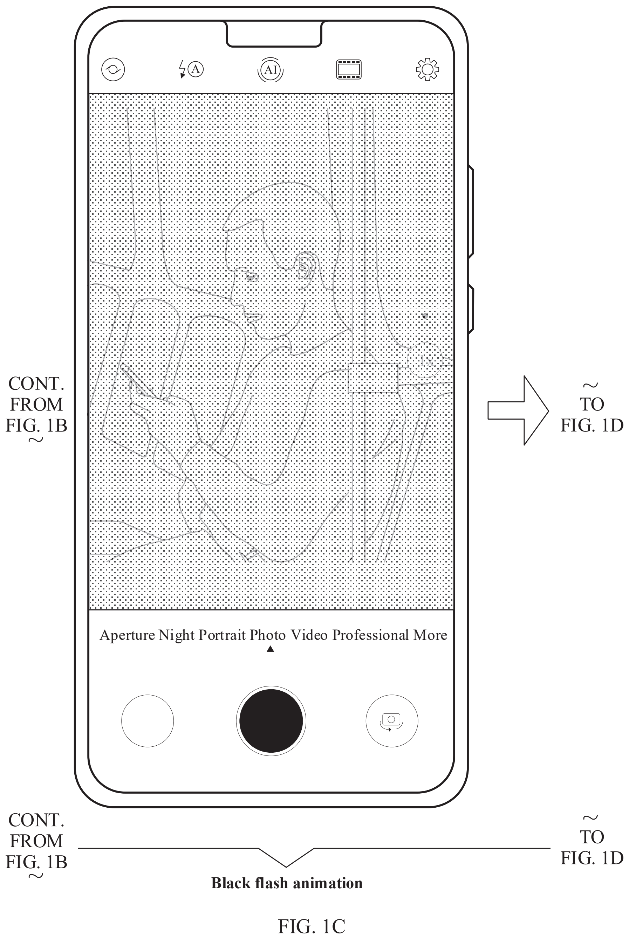

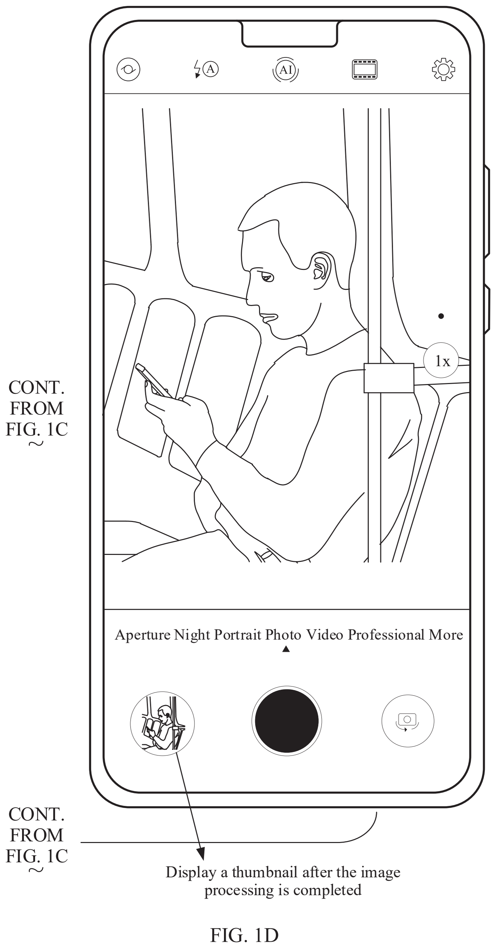

During interaction between a user and an electronic device, to ensure that instant and effective feedback can be performed for each input of the user, the electronic device may respond to the input of the user in a manner such as displaying an animation on an interface, playing a sound effect, or vibration. For example, FIG. 1A to FIG. 1D are diagrams of a photographing interface of an electronic device. Refer to FIG. 1A to FIG. 1D. When the user uses a camera application on the electronic device, the user taps a photographing button, and an interface of the electronic device displays a black flash animation that simulates a mechanical shutter effect. Specifically, an all-black layer is displayed on a preview image in a viewfinder frame of a display interface, and transparency of the all-black layer is decreased over time until the clear preview image is displayed. The electronic device may further play a shutter click sound effect. When the user taps the photographing button, the electronic device may obtain image information captured by the camera. When displaying the animation and playing the sound effect, the electronic device may complete image processing corresponding to a moment at which the user taps. After completing the image processing, the electronic device may display a thumbnail in the lower left corner of the photographing interface.

When input operations of the user are fast and continuous, for example, the user frequently taps the photographing button on the camera application, if a time interval at which the user triggers the tap operation is less than single play duration of the animation or the sound effect, how the electronic device responds to the continuous operations of the user becomes an urgent problem to be resolved.

In some implementations, in a process of displaying an animation and/or playing a sound effect in response to a user operation, the electronic device cannot respond to a same operation triggered by the user. In an example of the camera application, after the user taps the photographing button, the electronic device displays a black flash animation and plays a shutter sound effect. In a process in which the electronic device displays the black flash animation and plays the shutter sound effect, the electronic device does not respond when the user taps the photographing button again. After the electronic device stops displaying the black flash animation and stops playing the shutter sound effect, the electronic device may respond when the user taps the photographing button again. In addition, after the electronic device stops displaying the black flash animation and stops playing the shutter sound effect, if the electronic device does not complete the image processing corresponding to the moment at which the user taps, the electronic device does not respond when the user taps the photographing button again. It can be learned that, in this implementation, the electronic device cannot coordinate a plurality of processes of a user operation, animation and sound effect playing, and image processing. Consequently, a problem of untimely feedback on a user operation and unsmooth user experience is caused.

Based on the foregoing problem, an embodiment of this application provides a response method for continuous operations. The method may be performed by an electronic device. In the method, the electronic device detects a first operation triggered by a user at a first moment, and executes a response action corresponding to the first operation. The electronic device detects a second operation triggered by the user at a second moment, and when determining that execution duration of the response action corresponding to the first operation at the second moment is greater than or equal to preset duration, ends the response action corresponding to the first operation, and executes a response action corresponding to the second operation. The preset duration is less than single execution duration of a response action corresponding to an operation triggered by the user. According to the method, the preset duration in embodiments of this application may be understood as preset minimum duration for the electronic device to execute a response action. When the electronic device receives an operation triggered by the user, if execution duration of a response action corresponding to a previous operation triggered by the user is greater than or equal to the preset duration, the electronic device may interrupt the response action corresponding to the previous operation, and execute a response action corresponding to the current operation, to accelerate a response speed of the electronic device to continuous operations triggered by the user, ensure smooth response of the electronic device to the continuous operation of the user, and improve user experience.

The response method for continuous operations provided in embodiments of this application may be applied to various application scenarios in which a user operation needs to be fed back. For example, the camera application in the electronic device needs to play an animation/a sound effect in response to an operation of tapping a photographing button by the user, and a game application needs to play an animation/a sound effect in response to an operation of tapping a control by the user. A specific application scenario is not limited in embodiments of this application.

The following describes an electronic device, and embodiments for using such an electronic device. The electronic device in embodiments of this application may be a tablet computer, a mobile phone, a vehicle-mounted device, an augmented reality (augmented reality, AR)/virtual reality (virtual reality, VR) device, a notebook computer, or an ultra-mobile personal computer (ultra-mobile personal computer, UMPC), a netbook, a personal digital assistant (personal digital assistant, PDA), a wearable device, or the like. A specific type of the electronic device is not limited in embodiments of this application.

In some embodiments of this application, the electronic device may alternatively be a portable terminal device that further includes another function, for example, a personal digital assistant function and/or a music player function. An example embodiment of the portable terminal device includes but is not limited to a portable terminal device using iOS^{®}, Android^{®}, Microsoft^{®}, HarmonyOS^{®}, or another operating system.

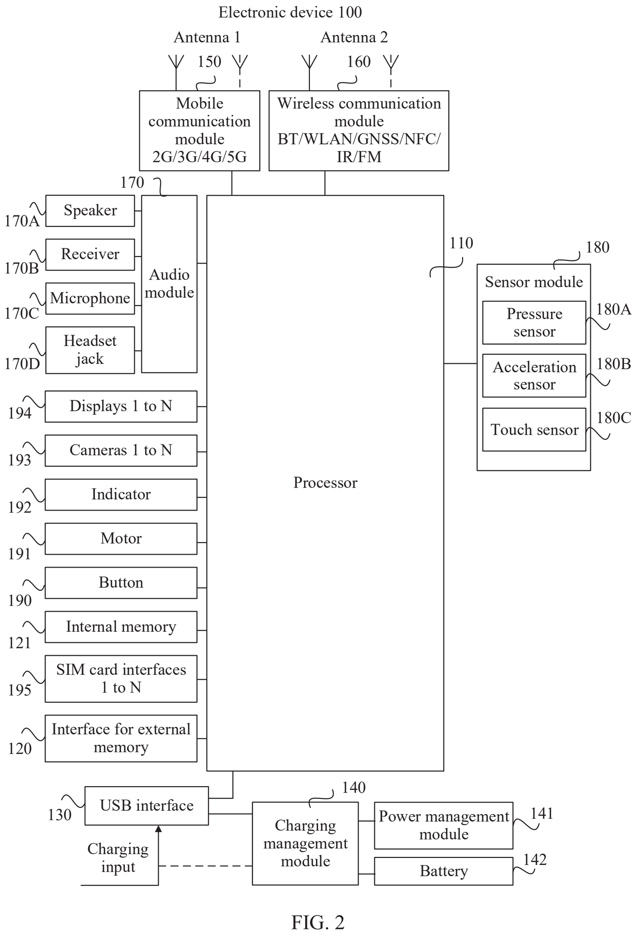

FIG. 2 is a diagram of a structure of an electronic device 100 according to an embodiment of this application. As shown in FIG. 2, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device. The charging management module 140 is configured to receive a charging input from the charger. The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The display 194 is configured to display a display interface of an application, for example, display a display page of an application installed on the electronic device 100. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, software code of at least one application, and the like. The data storage area may store data (for example, a captured image or a recorded video) and the like generated when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The interface 120 for external memory may be configured to connect to an external memory card, such as a micro SD card, to extend a storage capability of the electronic device. The external memory card communicates with the processor 110 through the interface 120 for external memory, to implement a data storage function. For example, files such as pictures or videos are stored in the external memory card.

The electronic device 100 may implement an audio function, for example, music playing and recording, through the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal, and can convert the pressure signal into an electrical signal. In some embodiments, the pressure sensor 180A may be disposed on the display 194.

The touch sensor 180C is also referred to as a "touch panel". The touch sensor 180C may be disposed on the display 194, and the touch sensor 180C and the display 194 constitute a touchscreen, which is also referred to as a "touch screen". The touch sensor 180C is configured to detect a touch operation performed on or near the touch sensor. The touch sensor may transfer the detected touch operation to the application processor to determine a type of the touch event. A visual output related to the touch operation may be provided by using the display 194. In some other embodiments, the touch sensor 180C may also be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio play) may correspond to different vibration feedback effects. A touch vibration feedback effect may be further customized. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to come into contact with and be separated from the electronic device 100.

It may be understood that the components shown in FIG. 2 do not constitute a specific limitation on the electronic device 100. The electronic device may further include more or fewer components than those shown in the figure, or some components may be combined, or some components may be split, or there may be a different component arrangement. In addition, a combination/connection relationship between the components in FIG. 2 may also be adjusted and modified.

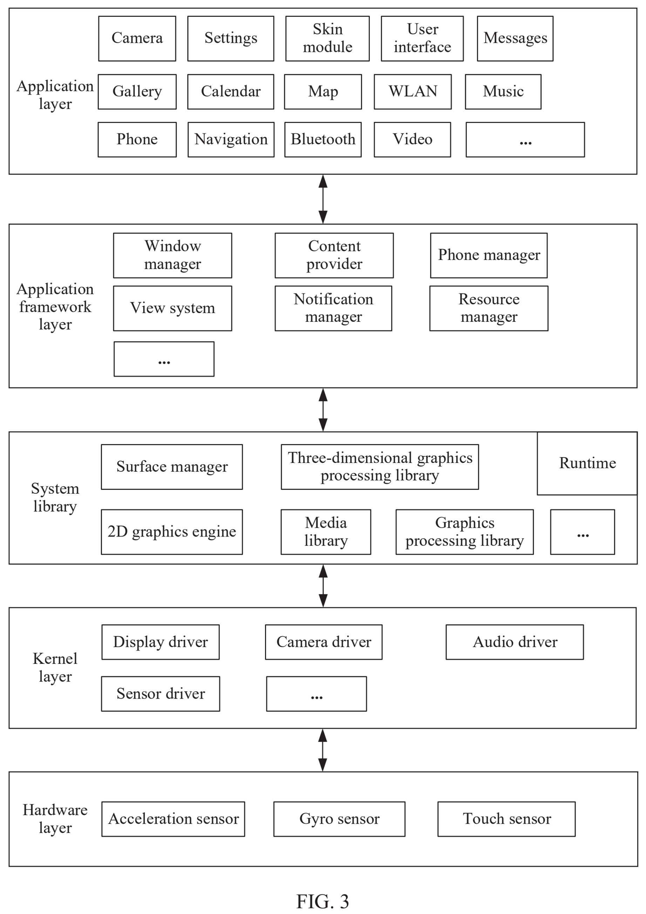

FIG. 3 is a block diagram of a software structure of an electronic device according to an embodiment of this application. As shown in FIG. 3, the software structure of the electronic device may be a layered architecture. For example, software may be divided into several layers, and each layer has a clear role and task. The layers communicate with each other through a software interface. In some embodiments, an operating system is divided into four layers: an application layer, an application framework (framework, FWK) layer, a runtime (runtime) and system library, and a kernel layer from top to bottom.

The application layer may include a series of application packages (application package). As shown in FIG. 3, the application layer may include Camera, Settings, a skin module, a user interface (user interface, UI), a third-party application, and the like. The third-party application may include Gallery, Calendar, Phone, Map, Navigation, WLAN, Bluetooth, Music, Video, Messages, and the like. In embodiments of this application, the application layer may include a target installation package that is of a target application and that the electronic device requests to download from a server, and a function file and a layout file in the target installation package are adapted to the electronic device.

The application framework layer provides an application programming interface (application programming interface, API) and a programming framework for an application at the application layer. The application framework layer may include some predefined functions. As shown in FIG. 3, the application framework layer may include a window manager, a content provider, a view system, a phone manager, a resource manager, and a notification manager.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, audio, calls that are made and answered, a browsing history and a bookmark, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that runs on a background, or may be a notification that appears on the screen in a form of a dialog window. For example, text information is prompted in the status bar, an alert tone is made, the electronic device vibrates, or an indicator blinks.

A runtime includes a core library and a virtual machine. The runtime is responsible for scheduling and managing an operating system.

The kernel library includes two parts: a function that needs to be invoked in Java language, and a kernel library of the operating system. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), a 2D graphics engine (for example, SGL), and an image processing library.

The surface manager is configured to manage a display subsystem and provide fusion of 2D and 3D layers for a plurality of applications.

The media library supports play and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The hardware layer may include various sensors, such as an acceleration sensor, a gyro sensor, and a touch sensor.

It should be noted that the structures shown in FIG. 2 and FIG. 3 are merely examples of the electronic device provided in embodiments of this application, and cannot impose any limitation on the electronic device provided in embodiments of this application. In specific implementation, the electronic device may have more or fewer components or modules than those in the structures shown in FIG. 2 or FIG. 3.

The following describes a response method for continuous operations provided in embodiments of this application.

In embodiments of this application, after a user triggers an operation, an electronic device may execute a response action corresponding to the user operation. For example, the response action may include at least one of playing an animation, playing a sound effect, and data processing. To ensure a display effect of an animation and a sound effect, when detecting continuous operations triggered by the user, the electronic device may execute a response action corresponding to an operation for preset duration and then execute a response action corresponding to a next operation. To ensure that the electronic device can complete data processing, when detecting the continuous operations triggered by the user, the electronic device may execute the response action corresponding to the next operation after determining that data processing corresponding to the operation is completed. The following separately describes, for the foregoing different cases, the response method for continuous operations provided in embodiments of this application.

In some embodiments, the electronic device may determine, based on execution duration of a response action corresponding to a user operation, whether to end the response action, and execute a response action corresponding to a next operation.

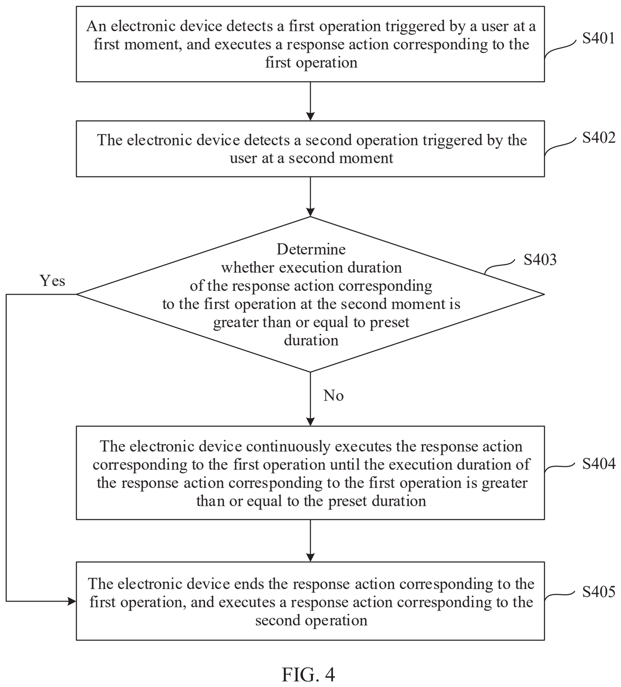

FIG. 4 is a flowchart of a response method for continuous operations according to an embodiment of this application. The method may be performed by an electronic device, and the electronic device may have a structure shown in FIG. 2 and/or FIG. 3. Refer to FIG. 4. The method includes the following steps.

S401: The electronic device detects a first operation triggered by a user at a first moment, and executes a response action corresponding to the first operation.

In this embodiment of this application, the first operation triggered by the user may be any operation triggered by the user on a display of the electronic device, such as tap, slide, or double-tap. The first operation may also be an operation of inputting a voice instruction by the user. A type of the first operation is not limited in this embodiment of this application.

After detecting the first operation triggered by the user, the electronic device may execute the response action corresponding to the first operation. The response action corresponding to the first operation may be at least one of an animation, a sound effect, data processing, or the like that lasts for a period of time. Optionally, in this embodiment of this application, sustained duration in which the electronic device plays an animation and a sound effect after the user triggers one operation may be single execution duration, and the single execution duration may be a preset value.

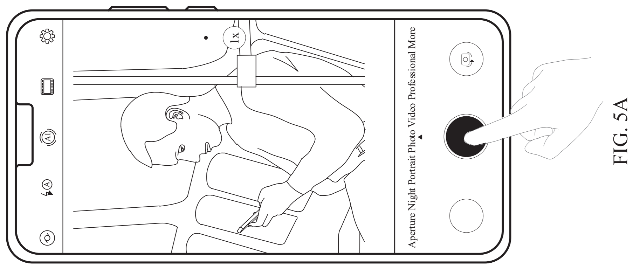

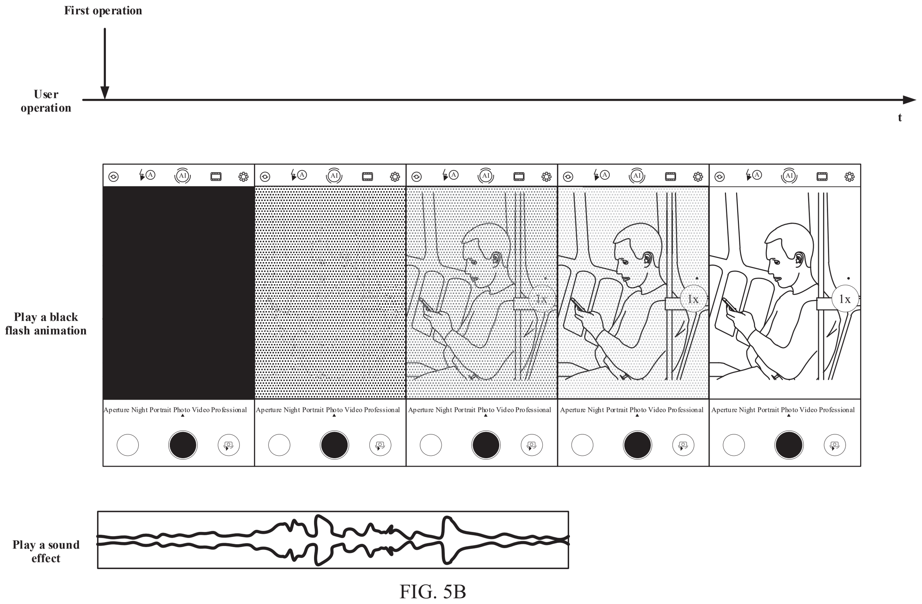

For example, a camera application in the electronic device is used as an example. FIG. 5A and FIG. 5B are diagrams of a photographing process of the camera application according to an embodiment of this application. Refer to FIG. 5A and FIG. 5B. The first operation triggered by the user may be that the user taps a photographing button. After detecting the first operation, the electronic device may obtain image information captured by a camera when the user triggers the first operation. It should be noted that the tap operation of the user may be that a finger of the user touches a screen and then is lifted. The first moment may be a moment at which the finger of the user is lifted. The electronic device may obtain the image information captured by the camera at the first moment. The electronic device may perform image processing on the obtained image information, to generate an image taken by the user.

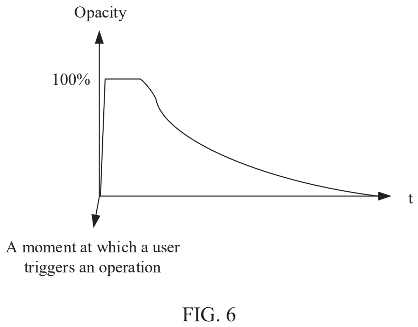

Refer to FIG. 5A and FIG. 5B. After the electronic device detects the first operation, the electronic device may further play a black flash animation. The black flash animation may be a display effect obtained after a layer is superimposed on a preview image in a viewfinder frame on a photographing interface. The layer is initially displayed as all black, and opacity of the layer is decreased over time until the layer changes to a fully transparent layer. For example, FIG. 6 is a diagram of an opacity change curve of a superimposed layer according to an embodiment of this application. Refer to FIG. 6. The opacity change curve may be a spring curve, for example, may be a curve whose rigidity is 300, damping is 35, and initial speed is 0. When the electronic device displays an animation based on the opacity curve, the electronic device may gradually decrease opacity of the superimposed layer after displaying the all-black layer for a period of time (for example, 50 ms). In this case, a display effect in the viewfinder frame may be gradually displaying an increasingly clear preview image, and the preview image may be an image captured by the camera of the electronic device in real time. Duration that elapses since the electronic device starts to display the superimposed layer until the opacity of the superimposed layer is changed to 0 may be the single execution duration.

In addition, refer to FIG. 5A and FIG. 5B. After the electronic device detects the first operation, the electronic device may further play a shutter sound effect, and playing duration of the shutter sound effect may also be the single execution duration.

It may be understood that, in a process in which the electronic device executes the response action of the first operation, if the electronic device does not detect another operation that conflicts with the first operation, the electronic device executes the response action of the first operation until the response action ends, for example, ends the response action of the first operation when the single execution duration expires.

S402: The electronic device detects a second operation triggered by the user at a second moment.

The second moment is later than the first moment.

Optionally, the second operation triggered by the user may be an operation that is the same as the first operation, or the second operation may be an operation that has a same function as the first operation.

For example, when the first operation is an operation of tapping the photographing button by the user on the photographing interface of the camera application, the second operation may be an operation of tapping the photographing button by the user on the photographing interface of the camera application, or the second operation may be any one of operations such as inputting a photographing instruction by the user by using a physical button of the electronic device or a voice.

S403: The electronic device determines whether execution duration of the response action corresponding to the first operation at the second moment is greater than or equal to preset duration. If the execution duration is greater than or equal to the preset duration, S405 is performed. If the execution duration is less than the preset duration, S404 is performed.

Optionally, the preset duration in this embodiment of this application may be understood as minimum duration for the electronic device to execute a response action. The preset duration may be a value less than the single execution duration. When the response action includes playing an animation or a sound effect, the preset duration may be duration that can ensure a play effect. For example, when the first operation and the second operation are photographing operations triggered by the user on the camera application, the preset duration may be 180 ms.

S404: The electronic device continuously executes the response action corresponding to the first operation until the execution duration of the response action corresponding to the first operation is greater than or equal to the preset duration.

It may be understood that, when the execution duration of the response action corresponding to the first operation at the second moment is less than the preset duration, if the electronic device ends the response action corresponding to the first operation in this case, abnormal experience of the user may be brought because the duration of the response action is excessively short. On the camera application described above, after the user taps the photographing button, the electronic device displays a black flash animation. If duration of the animation is excessively short, the electronic device displays the black flash animation for a plurality of times in a short period of time, resulting in poor user perception.

In an optional implementation, when determining that the execution duration of the response action corresponding to the first operation at the second moment is less than the preset duration, the electronic device may continue to execute the response action corresponding to the first operation until the execution duration of the response action corresponding to the first operation is greater than or equal to the preset duration, and then the electronic device may respond to the second operation of the user. In other words, when the user triggers the second operation when the execution duration of the response action corresponding to the first operation is less than the preset duration, a delay occurs when the electronic device executes a response action of the second operation.

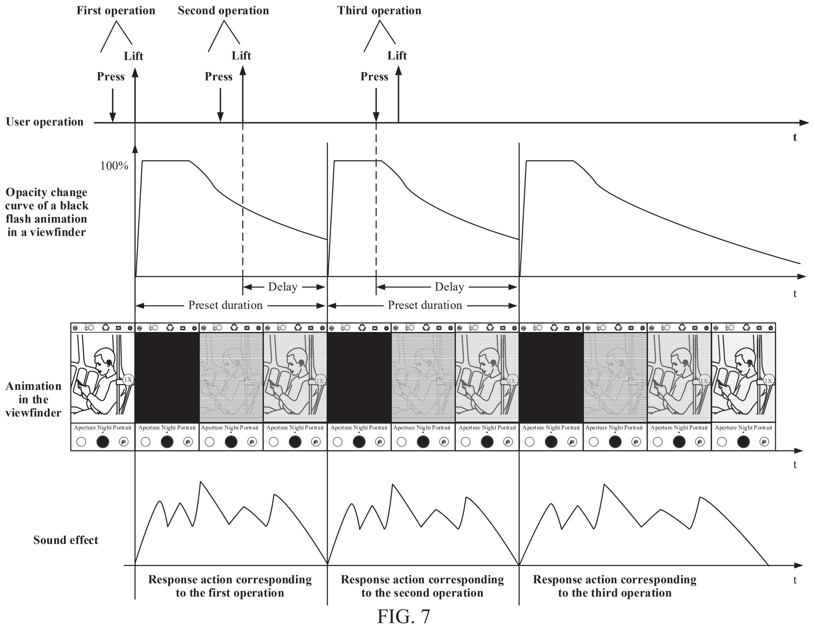

For example, the user continuously performs operations on the camera application. FIG. 7 is a diagram of executing a response action according to an embodiment of this application. Refer to FIG. 7. The first operation and the second operation may be tap operations triggered by the user on the photographing button. The tap operation may include a process in which the user triggers a screen and the user lifts a hand. At a moment at which the user lifts the hand, the electronic device may obtain image information captured by the camera and start image processing. After detecting the first operation triggered by the user, the electronic device may execute the response action corresponding to the first operation. As shown in FIG. 7, the response action corresponding to the first operation is playing an animation and a sound effect. The electronic device detects the second operation triggered by the user. In this case, the execution duration of the response action corresponding to the first operation is less than the preset duration, and the electronic device continuously executes the response action corresponding to the first operation until the execution duration of the response action corresponding to the first operation is greater than or equal to the preset duration. As shown in FIG. 7, when the execution duration of executing the response action corresponding to the first operation by the electronic device is equal to the preset duration, the electronic device stops executing the response action corresponding to the first operation, and executes the response action corresponding to the second operation. In this case, there is a delay for the response action corresponding to the second operation, but this manner can ensure an effect of executing the response action by the electronic device. Similarly, if execution duration of executing the response action corresponding to the second operation by the electronic device is less than the preset duration, the electronic device detects a third operation triggered by the user. The third operation may be a tap operation triggered by the user on the photographing button. The electronic device continuously executes the response action corresponding to the second operation until the execution duration of the response action corresponding to the second operation is greater than or equal to the preset duration, and then ends the response action corresponding to the second operation and starts to execute a response action corresponding to the third operation.

In addition, in some scenarios, when the execution duration of executing the response action corresponding to the first operation by the electronic device is less than the preset duration, if the electronic device detects a plurality of operations triggered by the user and a time difference between triggering time of each operation and triggering time of the first operation is less than the preset duration, the electronic device may determine one operation from the plurality of operations as the second operation, execute the response action corresponding to the second operation when the execution duration of the response action corresponding to the first operation is greater than or equal to the preset duration, and ignore an operation other than the second operation in the plurality of operations. Optionally, when determining the second operation from the plurality of operations, the electronic device may use an operation that is triggered earliest in the plurality of operations as the second operation, or use an operation that is triggered latest in the plurality of operations as the second operation, or use any one of the plurality of operations as the second operation. A manner of determining the second operation is not limited in this embodiment of this application.

S405: The electronic device ends the response action corresponding to the first operation, and executes the response action corresponding to the second operation.

In an optional implementation, after detecting the second operation triggered by the user at the second moment, the electronic device may determine whether the execution duration of the response action corresponding to the first operation at the second moment is greater than or equal to the preset duration. If the execution duration of the response action corresponding to the first operation is greater than or equal to the preset duration, the electronic device may end the response action corresponding to the first operation, and execute the response action corresponding to the second operation.

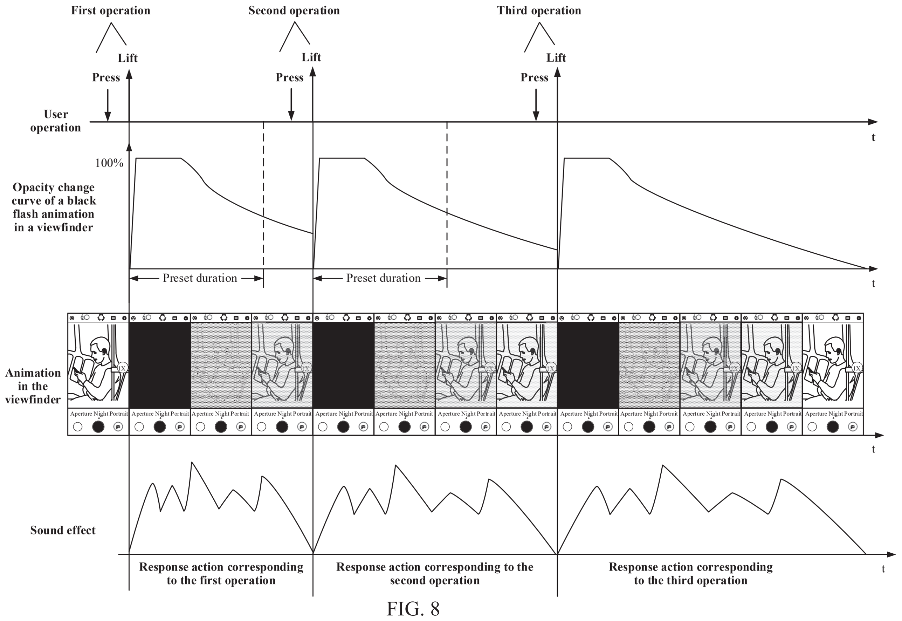

For example, the user continuously performs operations on the camera application. FIG. 8 is a diagram of executing a response action according to an embodiment of this application. Refer to FIG. 8. The first operation and the second operation may be tap operations triggered by the user on the photographing button. The tap operation may include a process in which the user triggers a screen and the user lifts a hand. At a moment at which the user lifts the hand, the electronic device may obtain image information captured by the camera and start image processing. After detecting the first operation triggered by the user, the electronic device may execute the response action corresponding to the first operation. As shown in FIG. 8, the response action corresponding to the first operation is playing an animation and a sound effect. The electronic device detects the second operation triggered by the user. In this case, the execution duration of the response action corresponding to the first operation is greater than or equal to the preset duration, and the electronic device may end the response action corresponding to the first operation, and execute the response action corresponding to the second operation. Similarly, if the execution duration of executing the response action corresponding to the second operation by the electronic device is greater than or equal to the preset duration, the electronic device detects a third operation triggered by the user. The third operation may be a tap operation triggered by the user on the photographing button. The electronic device may end the response action corresponding to the second operation, and execute a response action corresponding to the third operation.

In some embodiments, the electronic device may determine, based on whether data processing in a response action corresponding to a user operation is completed, whether to end the response action and execute a response action corresponding to a next operation.

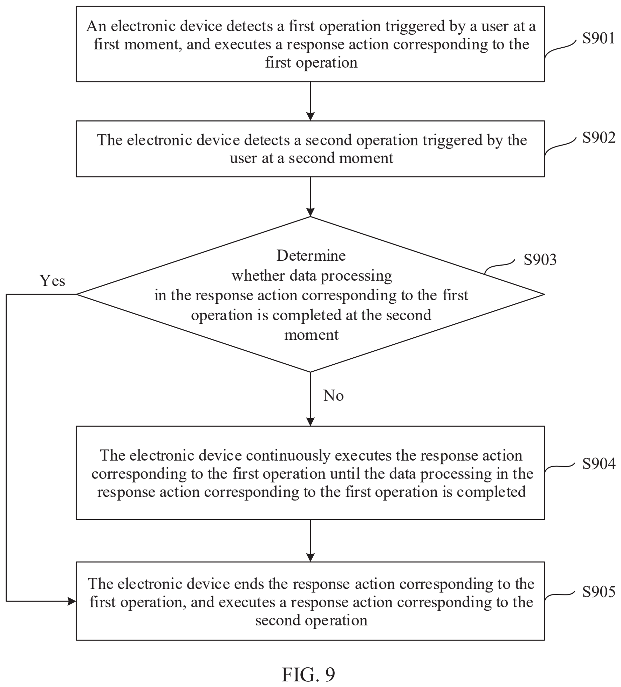

FIG. 9 is a flowchart of a response method for continuous operations according to an embodiment of this application. The method may be performed by an electronic device, and the electronic device may have a structure shown in FIG. 2 and/or FIG. 3. Refer to FIG. 9. The method includes the following steps.

S901: The electronic device detects a first operation triggered by a user at a first moment, and executes a response action corresponding to the first operation.

S902: The electronic device detects a second operation triggered by the user at a second moment.

The second moment is later than the first moment.

It should be noted that, for descriptions of the first operation and the response action corresponding to the first operation in S901, and the second operation in S902, refer to S401 and S402 in the embodiment shown in FIG. 4. Details are not described again.

S903: The electronic device determines whether data processing in the response action corresponding to the first operation is completed at the second moment. If the data processing is completed at the second moment, S905 is performed. If the data processing is not completed at the second moment, S904 is performed.

S904: The electronic device continuously executes the response action corresponding to the first operation until the data processing in the response action corresponding to the first operation is completed.

S905: The electronic device ends the response action corresponding to the first operation, and executes a response action corresponding to the second operation.

In some embodiments of this application, when the response action executed by the electronic device in response to the first operation triggered by the user includes the data processing, for example, after the user taps a photographing button on a camera application, the electronic device needs to perform image processing. When the electronic device determines whether to end the response action corresponding to the first operation after detecting the second operation, the electronic device may determine whether the data processing in the response action corresponding to the first operation is completed at the second moment. If the data processing is completed, the electronic device may end the response action corresponding to the first operation, and execute the response action corresponding to the second operation. If the data processing is not completed, the electronic device may continuously execute the response action corresponding to the first operation until the data processing is completed, then end the response action corresponding to the first operation, and execute the response action corresponding to the second operation.

For example, the user performs continuous operations on the camera application. In some non-conventional photographing scenarios, for example, in a photographing scenario in which the electronic device is in a high load, a current photographing environment is extremely dark, or a flash function of the camera application is enabled, when the electronic device performs image processing on image information captured by a camera, time for performing image processing increases compared with that in a conventional photographing scenario. In other words, image generation time of the electronic device increases. In this case, the electronic device may determine whether to end a currently executed response action based on whether an image is generated. Specifically, the electronic device detects the first operation triggered by the user, and the first operation may be a tap operation triggered by the user on the photographing button. The electronic device executes the response action corresponding to the first operation. The response action includes playing an animation, playing a sound effect, and performing image processing. The tap operation may include a process in which the user triggers a screen and the user lifts a hand. At a moment at which the user lifts the hand, the electronic device may obtain image information captured by the camera and start image processing. The electronic device detects the second operation triggered by the user, and the second operation may be a tap operation triggered by the user on the photographing button. The electronic device determines whether the image processing corresponding to the first operation is completed. If the image processing is not completed, the electronic device continues to execute the response action corresponding to the first operation until the image processing is completed. In other words, the electronic device continues to play the animation and the sound effect, and continues to perform the image processing until the image processing is completed. The electronic device then ends the response action corresponding to the first operation, and starts to execute the response action corresponding to the second operation.

In some embodiments, the electronic device may determine, based on whether execution duration of a response action corresponding to a user operation is greater than the preset duration and whether data processing in the response action is completed, whether to end the response action, and execute a response action corresponding to a next operation.

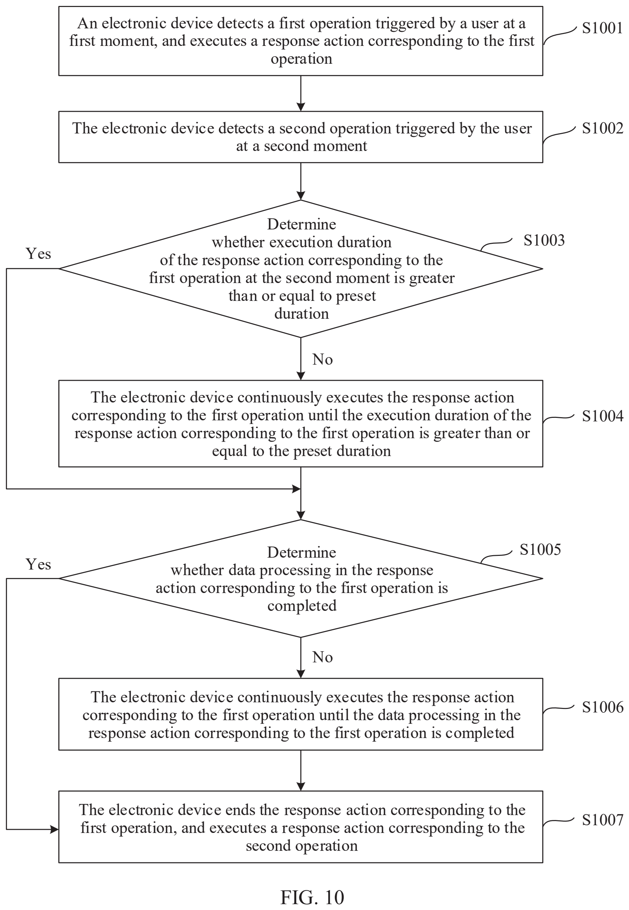

FIG. 10 is a flowchart of a response method for continuous operations according to an embodiment of this application. The method may be performed by an electronic device, and the electronic device may have a structure shown in FIG. 2 and/or FIG. 3. Refer to FIG. 10. The method includes the following steps.

S1001: The electronic device detects a first operation triggered by a user at a first moment, and executes a response action corresponding to the first operation.

S1002: The electronic device detects a second operation triggered by the user at a second moment.

S1003: The electronic device determines whether execution duration of the response action corresponding to the first operation at the second moment is greater than or equal to preset duration. If the execution duration is greater than or equal to the preset duration, S1005 is performed. If the execution duration is less than the preset duration, S1004 is performed.

S1004: The electronic device continuously executes the response action corresponding to the first operation until the execution duration of the response action corresponding to the first operation is greater than or equal to the preset duration.

S1005: The electronic device determines whether data processing in the response action corresponding to the first operation is completed. If the data processing is completed, S1007 is performed. If the data processing is not completed, S1006 is performed.

It should be noted that, if the electronic device determines that the execution duration of the response action corresponding to the first operation at the second moment is greater than or equal to the preset duration, that is, the electronic device performs S1005 after performing S1003, the electronic device may determine whether the data processing in the response action corresponding to the first operation is completed at the second moment in S1005. If the electronic device determines that the execution duration of the response action corresponding to the first operation at the second moment is less than the preset duration, in other words, the electronic device needs to perform S1004 after performing S1003, the electronic device may determine, in S1005, whether the data processing in the response action corresponding to the first operation is completed after the electronic device completes S1004.

S1006: The electronic device continuously executes the response action corresponding to the first operation until the data processing in the response action corresponding to the first operation is completed.

S1007: The electronic device ends the response action corresponding to the first operation, and executes a response action corresponding to the second operation.

In some embodiments of this application, when the response action executed by the electronic device in response to the first operation triggered by the user includes playing an animation or a sound effect and data processing, for example, after the user taps a photographing button on a camera application, the electronic device needs to perform image processing, and also needs to play an animation and a sound effect that simulate a photographing shutter effect. When the electronic device determines whether to end the response action corresponding to the first operation after detecting the second operation, when the electronic device determines that the execution duration of the response action corresponding to the first operation is greater than or equal to the preset duration, the electronic device may further determine whether the data processing in the response action corresponding to the first operation is completed. If the data processing is completed, the electronic device may end the response action corresponding to the first operation, and execute the response action corresponding to the second operation. If the data processing is not completed, the electronic device may continuously execute the response action corresponding to the first operation until the data processing is completed, then end the response action corresponding to the first operation, and execute the response action corresponding to the second operation.

For example, the user performs continuous operations on the camera application. The electronic device detects the first operation triggered by the user, and the first operation may be a tap operation triggered by the user on the photographing button. The electronic device executes the response action corresponding to the first operation. The response action includes playing an animation, playing a sound effect, and performing image processing. The tap operation may include a process in which the user triggers a screen and the user lifts a hand. At a moment at which the user lifts the hand, the electronic device may obtain image information captured by the camera and start image processing. The electronic device detects the second operation triggered by the user, and the second operation may be a tap operation triggered by the user on the photographing button. The electronic device determines whether the execution duration of the response action corresponding to the first operation is greater than or equal to the preset duration. When the execution duration of the response action corresponding to the first operation is greater than or equal to the preset duration, the electronic device determines whether image processing corresponding to the first operation is completed. If the image processing is not completed, the electronic device continues to execute the response action corresponding to the first operation until the image processing is completed. In other words, the electronic device continues to play the animation and the sound effect, and continues to perform the image processing until the image processing is completed. The electronic device ends the response action corresponding to the first operation, and starts to execute the response action corresponding to the second operation.

It should be noted that an execution sequence of S1003 and S1004 and S1005 and S1006 in the embodiment shown in FIG. 10 is not limited in this embodiment of this application. In other words, in specific implementation, S1003 and S1004 may be first performed, and then S1005 and S1006 may be performed. That is, determining is first performed based on a condition indicating whether the execution duration of the response action corresponding to the first operation is greater than the preset duration, and then determining is performed based on a condition indicating whether the data processing in the response action corresponding to the first operation is completed. Alternatively, S1005 and S1006 may be first performed, and then S1003 and S1004 are performed. That is, determining is first performed based on a condition indicating whether the data processing in the response action corresponding to the first operation is completed, and then determining is performed based on a condition indicating whether the execution duration of the response action corresponding to the first operation is greater than the preset duration. It may be understood that an execution sequence of the foregoing steps does not affect essence of the solution in this embodiment of this application. In addition, for a specific embodiment of the embodiment shown in FIG. 10, refer to the descriptions in embodiments shown in FIG. 4 and FIG. 9. Details are not described again.

It should be understood that the plurality of embodiments may be mutually referenced or combined.

Based on the foregoing embodiments, this application further provides an electronic device. The electronic device includes a plurality of functional modules. The plurality of functional modules interact with each other to implement functions performed by the electronic device in the methods described in embodiments of this application, for example, functions of the electronic device in the embodiment shown in FIG. 4, FIG. 9, or FIG. 10. The plurality of functional modules may be implemented based on software, hardware, or a combination of software and hardware, and the plurality of functional modules may be randomly combined or divided based on specific implementation.

Based on the foregoing embodiments, this application further provides an electronic device. The electronic device includes at least one processor and at least one memory. The at least one memory stores computer program instructions. When the electronic device runs, the at least one processor performs functions performed by the electronic device in the methods described in embodiments of this application, for example, functions of the electronic device in the embodiment shown in FIG. 4, FIG. 9, or FIG. 10.

Based on the foregoing embodiments, this application further provides a computer program product including instructions. When the computer program product runs on a computer, the computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A response method for continuous operations, applied to an electronic device, wherein the method comprises:
detecting a first operation triggered by a user at a first moment, and executing a response action corresponding to the first operation;
detecting a second operation triggered by the user at a second moment, wherein the second moment is later than the first moment; and
if execution duration of the response action corresponding to the first operation at the second moment is greater than or equal to preset duration, ending the response action corresponding to the first operation, and executing a response action corresponding to the second operation, wherein the preset duration is less than single execution duration, and the single execution duration is preset sustained duration of the response action corresponding to the first operation.

2. The method according to claim 1, wherein the method further comprises:
if the execution duration of the response action corresponding to the first operation at the second moment is less than the preset duration, continuously executing the response action corresponding to the first operation until the execution duration of the response action corresponding to the first operation is greater than or equal to the preset duration; and
after the execution duration of the response action corresponding to the first operation is greater than or equal to the preset duration, ending the response action corresponding to the first operation, and executing the response action corresponding to the second operation.

3. The method according to claim 2, wherein the method further comprises:
when the execution duration of the response action corresponding to the first operation is less than the preset duration, detecting a plurality of operations triggered by the user; and
determining a target operation from the plurality of operations, and using the target operation as the second operation, wherein
the target operation is any one of the plurality of operations, or the target operation is an operation that is triggered earliest in the plurality of operations, or the target operation is an operation that is triggered latest in the plurality of operations.

4. The method according to any one of claims 1 to 3, wherein the response action corresponding to the first operation comprises data processing; and before ending the response action corresponding to the first operation and executing the response action corresponding to the second operation, the method further comprises:
determining that the data processing in the response action corresponding to the first operation is completed.

5. The method according to any one of claims 1 to 3, wherein the first operation is a photographing operation triggered by the user on a camera application of the electronic device, and the response action corresponding to the first operation comprises at least one of the following:
playing an animation;
playing a sound effect; and
obtaining image information captured by a camera at the first moment, and performing image processing based on the image information.

6. A response method for continuous operations, applied to an electronic device, wherein the method comprises:
detecting a first operation triggered by a user at a first moment, and executing a response action corresponding to the first operation, wherein the response action corresponding to the first operation comprises data processing;
detecting a second operation triggered by the user at a second moment, wherein the second moment is later than the first moment; and
if the data processing in the response action corresponding to the first operation is completed at the second moment, ending the response action corresponding to the first operation, and executing a response action corresponding to the second operation.

7. The method according to claim 6, wherein the method further comprises:
if the data processing in the response action corresponding to the first operation is not completed at the second moment, continuously executing the response action corresponding to the first operation until the data processing is completed; and
after the data processing is completed, ending the response action corresponding to the first operation, and executing the response action corresponding to the second operation.

8. An electronic device, comprising at least one processor, wherein the at least one processor is coupled to at least one memory, and the at least one processor is used to read a computer program stored in the at least one memory, to perform the method according to any one of claims 1 to 5, or perform the method according to claim 6 or 7.

9. An electronic device, comprising a plurality of functional modules, wherein the plurality of functional modules interact with each other to implement the method according to any one of claims 1 to 5, or perform the method according to claim 6 or 7.

10. A computer-readable storage medium, wherein the computer-readable storage medium stores instructions, and when the instructions are run on a computer, the computer is enabled to perform the method according to any one of claims 1 to 5, or perform the method according to claim 6 or 7.

11. A computer program product comprising instructions, wherein when the computer program product runs on a computer, the computer is enabled to perform the method according to any one of claims 1 to 5, or perform the method according to claim 6 or 7.
